# EUROPÄISCHE PATENTSCHRIFT

(11) **EP 2 029 321 B1**
(45) Veröffentlichungstag und Bekanntmachung des Hinweises auf die Patenterteilung: **03.03.2010**
(21) Anmeldenummer: 07725427.4
(22) Anmeldetag: 22.05.2007
(51) Int. Cl.: B23Q 11/00

(54) **SPINDELEINHEIT MIT IM BETRIEB VERSTELLBARER ARBEITSSPINDEL**
SPINDLE UNIT COMPRISING A WORKING SPINDLE THAT CAN BE ADJUSTED WHEN IN OPERATION
UNITÉ BROCHE DOTÉE D'UNE BROCHE DE TRAVAIL RÉGLABLE EN MODE DE FONCTIONNEMENT

(30) Priorität: 19.06.2006 DE 102006028972
(43) Veröffentlichungstag der Anmeldung: 04.03.2009
(73) Patentinhaber: Chiron-Werke GmbH & Co. KG, 78532 Tuttlingen (DE)
(72) Erfinder: PRUST, Dirk, 78532 Tuttlingen (DE); WINKLER, Hans-Henning, 78532 Tuttlingen (DE)
(74) Vertreter: Keck, Stephan
(86) Internationale Anmeldenummer: PCT/EP2007/004527
(87) Internationale Veröffentlichungsnummer: WO 2007/147471

(56) Entgegenhaltungen:
- WO-A-02/21004
- WO-A-2005/000507
- DE-A1- 4 333 196
- DE-A1- 10 233 253
- DE-A1- 19 859 360
- GB-A- 1 281 939

## Beschreibung

Die vorliegende Erfindung betrifft eine Spindeleinheit mit einer in einem eigenen Lagergehäuse um ihre Längsachse drehbar gelagerten Arbeitsspindel, in der eine Aufnahme für Werkzeuge zur Bearbeitung von Werkstücken vorgesehen ist, und mit einer Verstelleinheit, um die Arbeitsspindel im Betrieb gegenüber dem Lagergehäuse - automatisch und ansteuerbar zu verstellen, sowie eine Werkzeugmaschine mit zumindest einer derartigen Spindeleinheit.

Derartige Spindeleinheiten und Werkzeugmaschinen sind im Stand der Technik vielfältig bekannt.

Die bekannten Spindeleinheiten werden einzeln oder zu mehreren in den bekannten Werkzeugmaschinen zur bspw. spanenden Bearbeitung von Werkstücken verwendet. Diese Werkzeugmaschinen weisen ein, zwei oder mehr Arbeitsspindeln auf, die jeweils in einem eigenen auch Spindelgehäuse genannten Lagergehäuse gelagert sind, wobei das oder die Spindelgehäuse fest an einem auch Spindelkopf genannten Spindelträger angeordnet sind.

Der Spindelkopf ist relativ zu einem Werkstücktisch, auf den zu bearbeitende Werkstücke in sogenannten Vorrichtungen aufgespannt werden können, in drei orthogonalen Achsen verfahrbar, die als x-, y- und z-Achse bezeichnet werden. Häufig sind noch weitere relative Bewegungen zwischen Arbeitsspindel und Werkstück möglich. So ist in einigen Anwendungsfällen der Spindelkopf schwenkbar gelagert, wobei auch noch weitere Achsen in dem Werkstück angeordnet sein können, das dazu bspw. in einer drehbaren oder schwenkbaren Vorrichtung gehalten ist.

Während derartige Werkzeugmaschinen steuerungstechnisch gut beherrschbar sind, gibt es jedoch den Bedarf an immer noch schnellerer Werkstückbearbeitung, um pro Zeiteinheit eine größere Anzahl an Werkstücken bearbeiten zu können.

Dieser Forderung wird zum einen durch immer schnellere relative Verfahrbarkeit zwischen Spindelkopf und Werkstücktisch entsprochen. Aufgrund der zu bewegenden großen Massen und den damit einhergehenden Beschleunigungskräften sind der Erhöhung der Fahrgeschwindigkeit jedoch Grenzen gesetzt, wenn die Genauigkeit und Reproduzierbarkeit der Bearbeitung innerhalb eines Werkstückes und zwischen zeitlich aufeinanderfolgend durch ein und dieselbe Arbeitsspindel bearbeiteten Werkstücken nicht nachteilig beeinflusst werden sollen.

Zum anderen kann der Durchsatz aber auch durch den Einsatz von Mehrspindelmaschinen erhöht werden.

Bei derartigen Mehrspindelmaschinen können entsprechend der Anzahl der Spindeln mehrere Werkstücke gleichzeitig mit jeweils einem in die jeweilige Arbeitsspindel eingesetzten Werkzeug synchron bearbeitet werden. Die Arbeitsspindeln und damit auch die Werkzeuge werden synchron in den drei Achsen des Koordinatensystems verfahren, so dass an den Werkstücken identische Bearbeitungsvorgänge ablaufen. Der Durchsatz an Werkstücken pro Werkzeugmaschine kann dadurch merklich gesteigert werden.

Die Mehrspindelmaschinen zeigen jedoch Probleme bei der Genauigkeit, die konstruktiv bedingt sind. Weil die Werkzeuge nicht getrennt voneinander verfahren werden können, ist es für die Genauigkeit und Reproduzierbarkeit der Werkstückbearbeitung entscheidend, dass der Abstand der Drehachsen der Arbeitsspindeln und damit der Abstand der Längsachsen der Werkzeuge zueinander exakt dem Abstand der Werkstücke zueinander entspricht. Dies kann dadurch erreicht werden, dass die die Werkstücke einspannenden Vorrichtungen so auf dem Werkstücktisch montiert und gegebenenfalls nachjustiert werden, dass sie zueinander einen Mittenabstand aufweisen, der dem Abstand der Längsachsen der Werkzeuge und/oder der Position der Längsachsen senkrecht zu diesem Abstand entspricht.

Gleichfalls ist es wichtig, dass die Werkzeuge in Richtung ihrer Längsachse, bei Fahrständermaschinen also in der Regel in Richtung der Z-Achse, eine identische Lage aufweisen, so dass sie beispielsweise gleichtiefe Bohrungen in die Werkstücke treiben können. Für die Genauigkeit und Reproduzierbarkeit sowohl zwischen zeitgleich parallel bearbeiteten als auch zwischen zeitlich nacheinander bearbeiteten Werkstücken ist es also schädlich, wenn die Werkzeuge unterschiedlich lang sind. Dies muss beim Einspannen des Werkzeuges in den jeweiligen Werkzeughalter berücksichtigt werden, über den das Werkzeug in die Aufnahme in der jeweiligen Arbeitsspindel eingespannt wird. Auf diese Weise werden immer Sätze von Werkzeugen in dem entsprechenden Werkzeugmagazin bereitgehalten, die bezüglich ihrer Länge aufeinander abgestimmt sind. Dennoch ist es möglich, dass aufgrund unterschiedlicher Abnutzung die Werkzeuge unterschiedliche Längen aufweisen, was dann zu Bearbeitungsungenauigkeiten führt.

Eine weitere Fehlerquelle bei derartigen Doppel- oder Mehrspindelmaschinen ergibt sich durch thermisch bedingte Veränderungen in der Lage sowohl der Lagergehäuse zueinander als auch der Vorrichtungen zueinander oder zu den Lagergehäusen. Im Laufe des Betriebes erwärmen sich derartige Werkzeugmaschinen in der Regel, was dazu führt, dass sich der Abstand zwischen den Lagergehäusen und damit den Arbeitsspindeln erhöht. Gleichfalls ist es möglich, dass sich die Arbeitsspindeln in Z-Richtung gegeneinander verlagern, da die thermischen Deflektionen sich auf die verschiedenen Lagergehäuse unterschiedlich auswirken. Neben der Verlagerung durch die zunehmende Eigen-erwärmung der Werkzeugmaschine ergeben sich derartige thermische Deflektionen im Laufe des Tages auch beispielsweise durch zunehmende Sonneneinstrahlung.

Zwar wirken sich die Temperaturänderungen auch auf den Abstand der Vorrichtungen zueinander aus, der Temperaturgang des Werkstücktisches ist jedoch deutlich verschieden von dem Temperaturgang des Spindelträgers, so dass die thermischen Deflektionen die Vorrichtungen auf andere Weise verlagern als die Lagergehäuse. Ein weiteres Problem besteht darin, dass während des Betriebes einer Werkzeugmaschine häufig auch Vorrichtungen ausgetauscht werden, wobei der Mittenabstand der neu eingewechselten Vorrichtungen von dem Mittenabstand der zuvor im Einsatz befindlichen Vorrichtungen verschieden sein kann. Dies bedeutet dann, dass die Lage der Werkstücke und damit die Lage der Vorrichtungen zueinander verändert und an die Lage der Arbeitsspindeln angepasst werden muss, damit die gewünschte Präzision bei der parallelen Bearbeitung von zwei oder mehr Werkstücken sichergestellt ist. Dies ist sehr mühsam und zeitaufwendig.

Insgesamt bedeutet dies, dass es bei Werkzeugmaschinen der eingangs genannten Art wünschenswert ist, die Lage der Arbeitsspindeln zueinander im Verlaufe des Betriebes justieren, also korrigieren, zu können, um beispielsweise die oben genannten thermischen Reflektionen zu kompensieren.

Im Stand der Technik sind nun verschiedene Verfahren bekannt, über die die Lage der Lagergehäuse bei Doppel- oder Mehrspindelmaschinen zueinander nachjustiert werden kann.

Die DE 103 29 402 A1 beschreibt eine Werkzeugmaschine, bei der die Lagergehäuse in Exzenterbüchsen gelagert sind, über die die Lagergehäuse achsparallel zu einer zentralen Achse verstellt werden können.

Die DE 198 59 360 A1 beschreibt eine Werkzeugmaschine, bei der der Abstand zwischen zwei Lagergehäusen durch piezoelektrische Stellelemente verändert wird, wodurch die relative Lage der Lagergehäuse zueinander achsparallel verschoben oder auch verkippt werden kann.

Eine ähnliche Konstruktion zeigt die DE 103 43 320 A1. Als Stellelement zwischen den Lagergehäusen ist hier jedoch eine Rippe vorgesehen, deren Temperatur über eine Thermovorrichtung erhöht oder erniedrigt wird, um so deren Länge zu verändern und damit die relative Lage der Lagergehäuse zueinander zu beeinflussen.

Die DD 34 868 A beschreibt einen Mehrspindelbohrkopf zum Bohren von zentralsymmetrisch auf einem Lochkreis angeordneten Bohrungen. Der Bohrkopf weist eine Reihe von Spindeleinheiten auf, die exzentrisch an einem Spindelträger gelagert sind, der wiederum drehbar in dem Bohrkopf angeordnet ist. Durch Verdrehen des Spindelträgers verändert sich der radiale Abstand der jeweiligen Spindeleinheit zum Zentrum des Bohrkopfes sowie der umfängliche Abstand zwischen den einzelnen Spindeleinheiten.

Aus der GB 1 281 939 sind ein Verfahren und eine Vorrichtung zur Positionssteuerungskompensation für Temperaturänderungen bei Werkzeugspindeln bekannt.

Bei all diesen Werkzeugmaschinen hat es sich als nachteilig herausgestellt, dass die Stellelemente nicht hinreichend schnell arbeiten bzw. unerwünschterweise die Genauigkeit der Bearbeitung beeinflussen. Ferner sind die Verstellwege häufig nicht ausreichend.

Vor diesem Hintergrund liegt der vorliegenden Erfindung die Aufgabe zugrunde, die eingangs genannte Werkzeugmaschine und Spindeleinheit derart weiterzubilden, dass eine schnelle, reproduzierbare und einfach ansteuerbare Verstellung der Arbeitsspindel mit hinreichendem Verstellweg möglich ist.

Bei der eingangs genannten Spindeleinheit und Werkzeugmaschine wird diese Aufgabe erfindungsgemäß dadurch gelöst, dass die Arbeitsspindel in ihrem Lagergehäuse verkippbar zur Verkippung der Arbeitsspindel im Betrieb gelagert ist.

Die der Erfindung zugrunde liegende Aufgabe wird auf diese Weise vollkommen gelöst.

Die Erfinder der vorliegenden Anmeldung haben nämlich erkannt, dass ein Problem bei den bekannten Spindeleinheiten und Werkzeugmaschinen darin liegt, dass jeweils die gesamte Spindeleinheit verstellt wird, dass also die Lagergehäuse verfahren und im Fall der Mehrspindelmaschinen relativ zueinander justiert und verstellt werden. Dies bedeutet zum einen, dass relativ schwere Einheiten verstellt bzw. bewegt werden müssen, was nur mit relativ hohen Kräften bewerkstelligt werden kann. Zum anderen sind die Reaktionszeiten der bekannten Stellvorrichtungen nicht nur wegen der hohen Kräfte sondern auch wegen der Art der jeweiligen Verstellung sehr langsam.

All diese Nachteile lassen sich nach Erkenntnis der Erfinder der vorliegenden Anmeldung vermeiden, wenn die Arbeitsspindel verstellbar in ihrem Lagergehäuse gelagert ist, so dass die Arbeitsspindeln sozusagen im Betrieb verstellt werden können, um die relative Ausrichtung der einzelnen Arbeitsspindeln zueinander nachzuführen bzw. die Arbeitsspindel gegenüber dem Lagergehäuse zu verstellen.

Damit ist es nun einerseits möglich, mehrere Arbeitsspindeln schnell relativ zueinander zu justieren, um automatisch im Betrieb thermischen Verlagerungen oder veränderten Abständen der Vorrichtungen oder durch Schwenken bedingte, veränderte Bearbeitungslagen der Vorrichtungen Rechnung zu tragen.

Selbstverständlich ist es prinzipiell bekannt, eine Arbeitsspindel in ihrem Lagergehäuse zu justieren, dabei handelt es sich jedoch um eine einmalige Justierung, die im Betrieb der Werkzeugmaschine nicht verändert wird, und schon gar nicht dazu verwendet werden kann, um Verlagerungen während des Betriebes auszugleichen.

Um die Arbeitsspindel in ihrem jeweiligen Lagergehäuse im Betrieb justieren zu können, wird Fremdenergie, beispielsweise in Form eines Stellmotors, verwendet, über den zu einem beliebigen Zeitpunkt die Ausrichtung einer Arbeitsspindel in ihrem Lagergehäuse verändert werden kann.

Zum anderen kann die erfindungsgemäße Spindeleinheit aber auch verwendet werden, um kleine aber sehr schnelle Bewegungen der Arbeitsspindel zu realisieren. Die erfindungsgemäß vorgesehene Verstelleinheit ist sozusagen eine im Werkzeug liegende weitere, sehr schnelle Werkzeugachse, die sich der Verstellmöglichkeit des Spindelkopfes relativ zu dem Werkstücktisch überlagert.

Diese Verstellmöglichkeit kann für schnelle kurze Bewegungen des Werkzeuges genutzt werden, wie sie bspw. beim Stoßen von eckigen Nuten, dem Anfahren von Laserlichtschranken bei der Brucherkennung oder Durchmesser- bzw. Längenbestimmung von Werkzeugen, beim Rückhub zum Ausspanen bei Bohrzyklen etc. benötigt werden. Das Werkzeug kann bei der erfindungsgemäßen Spindeleinheit schnelle bspw. oszillierende Bewegungen relativ zu dem Lagergehäuse ausführen, die sich der Bewegung des Lagergehäuses selbst überlagern. Diese schnelle zusätzliche Werkzeugachse kann immer dann verwendet werden, wenn kleine aber schnelle Hübe erforderlich sind.

Die hohe Geschwindigkeit ergibt sich, weil die bewegten Massen deutlich geringer sind als bei der Verstellung der gesamten Spindeleinheit.

Die zusätzliche Werkzeugachse kann auch verwendet werden, um zeitgleich, also während der Bearbeitung Feinkorrekturen gegenüber der Bewegungsbahn des Spindelkopfes vorzunehmen. Durch derartige überlagerte Korrekturbewegungen können bspw. verfahrwegabhängige Neigungen des Spindelkopfes zum Werkzeugtisch, sog. Umschlagfehler, ausgeglichen werden.

Ferner ist es bevorzugt, wenn die Arbeitsspindel in ihrem Lagergehäuse in Längsrichtung verstellbar und verkippbar gelagert ist.

Durch die Verstellung in Längsrichtung lassen sich Arbeitsspindeln in Z-Richtung ausrichten, während durch das Verkippen einer Arbeitsspindel eine Verstellung in X-und/oder Y-Richtung erfolgen kann.

Mit der Möglichkeit, eine Arbeitsspindel in dem Lagergehäuse zu verkippen, beschreiten die Erfinder der vorliegenden Anmeldung einen im Stand der Technik bisher nicht gekannten Weg, um die Abstände von Arbeitsspindeln zueinander einzustellen bzw. Arbeitsspindeln zu verstellen. Im Gegensatz zu dem Verkippen von Spindeleinheiten gegeneinander scheint das Verkippen einer Arbeitsspindel in ihrem Lagergehäuse eine ganze Reihe von Problemen mit sich zu bringen, die zunächst gegen die Verwendung dieser Lösung sprechen könnten.

Zum einen führt das Verkippen nämlich zu einem Winkelfehler im Werkzeug, der jedoch aufgrund erster Versuche der Anmelderin toleriert werden kann.

Zum anderen führt das Verkippen zu einem Fluchtfehler zwischen der oberen und der unteren Lagerung, was zu einer übermäßigen Beanspruchung der Lager führen kann, so dass die Auslenkung durch den maximal zu tolerierenden Fluchtfehler begrenzt wird, der wiederum von der Lebensdauererwartung abhängt.

Versuche bei der Anmelderin haben nun jedoch gezeigt, dass diese zunächst der erfindungsgemäßen Lösung entgegenzustehen scheinenden Probleme durch die nachstehend noch beschriebenen konstruktiven Details beherrschbar sind, so dass mit der erfindungsgemäßen Konstruktion ein völlig neuer Weg bei der Verstellung und Ausrichtung von Arbeitsspindeln zueinander beschritten werden konnte.

Dabei ist es bevorzugt, wenn die Arbeitsspindel an ihrem unteren oder oberen Ende über ein erstes, mittels eines Stellmotors quer zur Längsrichtung verstellbares Lager in dem zugeordneten Lagergehäuse gelagert ist.

Bei dieser Maßnahme ist von Vorteil, dass die Verkippbarkeit der Arbeitsspindel dadurch realisiert wird, dass das obere oder das untere Lager quer zur Längsachse verstellt wird, wodurch sich gleichzeitig eine Auslenkung in X- und/oder Y-Richtung ergibt.

Die Erfinder der vorliegenden Anmeldung haben erkannt, dass bei nicht zu großen Auslenkungen auf diese Weise gegenüber dem Lagergehäuse verstellbare, schnelle Werkzeugachsen realisiert werden können, ohne dass eine übermäßige Beanspruchung der Lager der Arbeitsspindel erfolgt.

Weiter ist es bevorzugt, wenn die Arbeitsspindel an ihrem unteren oder oberen Ende über ein erstes, mittels eines Stellmotors in Längsrichtung verstellbares Lager in dem zugeordneten Lagergehäuse gelagert ist.

Hier ist von Vorteil, dass die Justierbarkeit und/oder Verstellbarkeit in Z-Richtung ebenfalls durch eine Verstellung des unteren oder oberen Lagers erfolgt. Damit ist es auch möglich, das Verkippen und das Längsverstellen dadurch zu realisieren, dass das entsprechende Lager sowohl quer- als auch längsverstellbar angeordnet ist.

Auf diese Weise sind nur geringe Massen zu bewegen, wodurch die so realisierte Werkzeugachse hohe Verfahrgeschwindigkeiten und Beschleunigungen zulässt, ohne dass die Masse der Spindeleinheit selbst übermäßig erhöht wird. Hier sei erwähnt, dass die erfindungsgemäß zusätzlich vorgesehenen Werkzeugachsen, die sowohl zur Justierung zum Zweck des Ausgleiches bspw. thermischer Deflektionen als auch als echte Werkzeugachse verwendet werden können, nur geringe Auslenkungen ermöglichen, die größeren Verfahrbewegungen erfolgen selbstverständlich nach wie vor über den Spindelkopf, der relativ zu dem Werkstücktisch in den drei orthogonalen Achsen verstellbar ist. Je geringer also die zusätzliche Masse für die erfindungsgemäß vorgesehene Verstelleinheit ist, desto geringer wird die Verfahrbarkeit der "Werkzeughauptachsen" beeinträchtigt.

Dabei ist es dann bevorzugt, wenn das erste Lager in der Verstelleinheit gehalten ist, die eine drehfest mit dem Lagergehäuse verbundene Außenhülse und eine das erste Lager aufnehmende, über den Stellmotor antreibbare Innenhülse umfasst.

Hier ist von Vorteil, dass die Verstelleinheit mechanisch sehr einfach aufgebaut ist, so dass sie nur geringe zusätzliche Massen mit sich bringt. Darüber hinaus erlaubt die erfindungsgemäß vorgesehene Verstelleinheit eine Querverstellung, wenn die Innenhülse exzentrisch und drehbar in den Außenhülse gelagert ist, wobei auch eine Längsverstellung möglich ist, wenn die Innenhülse über eine Gewindeverbindung in der Außenhülse gelagert ist.

Damit kann also eine aus Außenhülse und Innenhülse bestehende Verstelleinheit entweder die Querverstellung oder aber die Längsverstellung bewirken. Ein weiterer Vorteil besteht darin, dass Außenhülse und Innenhülse über eine mechanisch einfach zu realisierende Klemmung oder Verriegelung drehfest miteinander verbunden werden können, um trotz der zusätzlichen Achsen bzw. Verstellmöglichkeiten für die nötige Steifigkeit zu sorgen.

Vor diesem Hintergrund ist es bevorzugt, wenn zwischen Außenhülse und Innenhülse eine wahlweise betätigbare Klemmvorrichtung vorgesehen ist, um die Innenhülse wahlweise drehfest mit der Außenhülse zu verbinden.

Wenn die Innenhülse exzentrisch in der Außenhülse gelagert ist, so bestimmt das Maß der Exzentrizität das Maß, um das die Arbeitsspindel gegenüber dem Lagergehäuse verstellt werden kann. Bei kleinen Auslenkungen aus der "Nulllage" erfolgt dabei eine Verstellung im Wesentlichen lediglich quer zur Exzentrizität, die Verstellung in Richtung der Exzentrizität ist vernachlässigbar klein. Auf diese Weise kann also eine Justierung zwischen zwei verschiedenen Arbeitsspindeln dadurch erfolgen, dass eine der beiden Arbeitsspindeln in einer exzentrisch wirkenden Verstelleinheit gelagert ist, während die andere der beiden Arbeitsspindeln in einer in Längsrichtung verstellbaren Verstelleinheit gelagert ist. Dies ermöglicht eine Justierung sowohl in Z-Richtung als auch bspw. in Y-Richtung, also in Richtung des Abstandes zwischen den beiden Arbeitsspindeln.

Die Erfinder der vorliegenden Anmeldung haben erkannt, dass diese beiden Verstellmöglichkeiten bereits ausreichen, um bei einer Doppelspindelmaschine die thermischen Deflektionen ausgleichen zu können, die die Bearbeitungsgenauigkeit und Reproduzierbarkeit am stärksten beeinträchtigen. Die geringen Abweichungen in X-Richtung können dabei nach Erkenntnis der Erfinder toleriert werden.

Dabei ist es dann bevorzugt, wenn die Arbeitsspindel über das erste Lager exzentrisch und drehbar in der Innenhülse gelagert ist, die exzentrisch und drehbar in der Außenhülse gelagert ist.

Wenn das Maß der beiden Exzentrizitäten sich gerade aufhebt, bedeutet dies nichts anderes, als dass die Arbeitsspindel zentrisch zu der Außenhülse gelagert ist, so dass bezüglich der üblichen Ansteuerung der neuen Werkzeugmaschine keine Änderungen erforderlich sind, die Verstelleinheit schafft lediglich über die doppelte Exzentrizität die Möglichkeit, durch Verdrehen der Innenhülse die eine Arbeitsspindel überwiegend in Y-Richtung gegenüber der anderen Arbeitsspindel zu verstellen.

Weiter ist es bevorzugt, wenn die Innenhülse drehbar in einer über einen Stellmotor antreibbaren Zwischenhülse gelagert ist, die drehbar in der Außenhülse gelagert ist.

Hier ist von Vorteil, dass die Verstelleinheit zwei Verstellmöglichkeiten liefert, die eine Werkzeugachse wird durch die Drehbarkeit der Innenhülse in der Zwischenhülse und die andere Werkzeugachse durch die Drehbarkeit der Zwischenhülse in der Außenhülse realisiert.

Wenn die Innenhülse dabei exzentrisch in der Zwischenhülse und die Zwischenhülse exzentrisch in der Außenhülse gelagert ist, kann die Arbeitsspindel folglich sowohl in X- als auch in Y-Richtung verstellt werden, wobei sich selbstverständlich die beiden Exzentrizitäten, die vorzugsweise senkrecht zueinander ausgerichtet sind, in ihrer Wirkung überlagern. Durch entsprechendes Verdrehen sowohl der Innenhülse als auch der Zwischenhülse lässt sich jedoch in X- und in Y-Richtung im Rahmen der Exzentrizität jede beliebige Lage des Mittelpunktes der Arbeitsspindel zu dem Mittelpunkt der Außenhülse einstellen.

Wenn die Innenhülse exzentrisch in der Zwischenhülse und die Zwischenhülse über eine Gewindeverbindung längsverstellbar in der Außenhülse gelagert ist, bzw. die Innenhülse über eine Gewindeverbindung längsverstellbar in der Zwischenhülse und die Zwischenhülse exzentrisch in der Außenhülse gelagert ist, ergibt sich eine Verstellbarkeit quer zur Längsrichtung gleichzeitig mit einer Verstellbarkeit in Längsrichtung.

Weil die Verstellung der Arbeitsspindel gegenüber dem Lagergehäuse durch drehbar gelagerte Innenhülsen und ggf. Zwischenhülsen erfolgt, kann der Antrieb der Innenhülse und ggf. Zwischenhülse über einen üblichen Stellmotor erfolgen, der die Hülsen mit entsprechend hohen Drehzahlen antreibt, so dass nicht nur eine sehr schnelle Justierung der Lage der Arbeitsspindel gegenüber dem Lagergehäuse möglich ist, sondern auch sehr schnelle Werkzeugachsen erzielbar sind, deren Verstellgeschwindigkeit mindestens in der Größenordnung der Verstellgeschwindigkeit des Spindelkopfes liegt, wegen der geringeren bewegten Masse jedoch in der Regel höher ausgelegt werden kann.

Zwischen Innenhülse und Zwischenhülse und/oder zwischen Zwischenhülse und Außenhülse kann dabei wieder die schon erwähnte Klemmvorrichtung vorgesehen sein, um die verschiedene Hülsen wahlweise miteinander zu verriegeln, so dass ein einziger Stellmotor ausreicht, um Innen- und Zwischenhülse, wenn sie drehfest miteinander verklemmt sind, gemeinsam gegenüber der Außenhülse, oder die Innenhülse gegenüber Außen und Zwischenhülse zu verdrehen, wenn die letzteren drehfest miteinander verklemmt sind.

Allgemein ist es noch bevorzugt, wenn die Arbeitsspindel an ihrem von dem ersten Lager abgelegenen Ende über ein in Längsrichtung verschieblich gelagertes zweites Lager in dem zugeordneten Lagergehäuse gelagert ist.

Diese Maßnahme ist konstruktiv von Vorteil, während das erste Lager zum Verkippen und/oder Längsverschieben der Arbeitsspindel dient, bleibt das zweite Lager sozusagen passiv, es ermöglicht dadurch dem ersten Lager die oben beschriebenen Verstellmöglichkeiten.

Vor dem Hintergrund der obigen Ausführungen betrifft die vorliegende Erfindung auch eine Werkzeugmaschine mit zumindest einer erfindungsgemäßen Spindeleinheit, deren Lagergehäuse an einem Spindelkopf angeordnet ist.

Wenn die erfindungsgemäße Werkzeugmaschine lediglich eine erfindungsgemäße Spindeleinheit aufweist, so wird über die Verstelleinheit zumindest eine zusätzliche schnelle Werkzeugachse geliefert, die sozusagen aktiv zum Bearbeiten von Werkstücken, bspw. beim Stoßen, eingesetzt werden kann, oder zur Korrektur der Bewegungsbahn des Spindelkopfes, bspw. um Umschlagfehler zu vermeiden, oder zum Ausgleich von thermischen Deflektionen.

Sofern die erfindungsgemäße Werkzeugmaschine mit zwei oder mehr erfindungsgemäßen Spindeleinheiten versehen ist, die gemeinsam an einem Spindelkopf befestigt sind, kann durch geeignete Kombination der Verstelleinheiten nicht nur für unterschiedliche schnelle Werkzeugachsen, sondern auch für ein schnelles Justieren der Arbeitsspindeln zueinander gesorgt werden.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: in einer schematischen Vorderansicht eine neue Werkzeugmaschine mit zwei neuen Spindeleinheiten;
- Fig. 2: einen schematischen Längsschnitt durch eine der Spindeleinheiten aus Fig. 1;
- Fig. 3: eine Darstellung wie Fig. 2, jedoch mit einer in anderer Richtung wirkenden Verstelleinheit;
- Fig. 4: eine schematisch dargestellte Draufsicht auf eine Verstelleinheit, die eine Arbeitsspindel verkippen und längs verstellen kann; und
- Fig.5: eine Darstellung wie Fig. 4, jedoch mit einer in zwei Richtungen verkippbaren Arbeitsspindel.

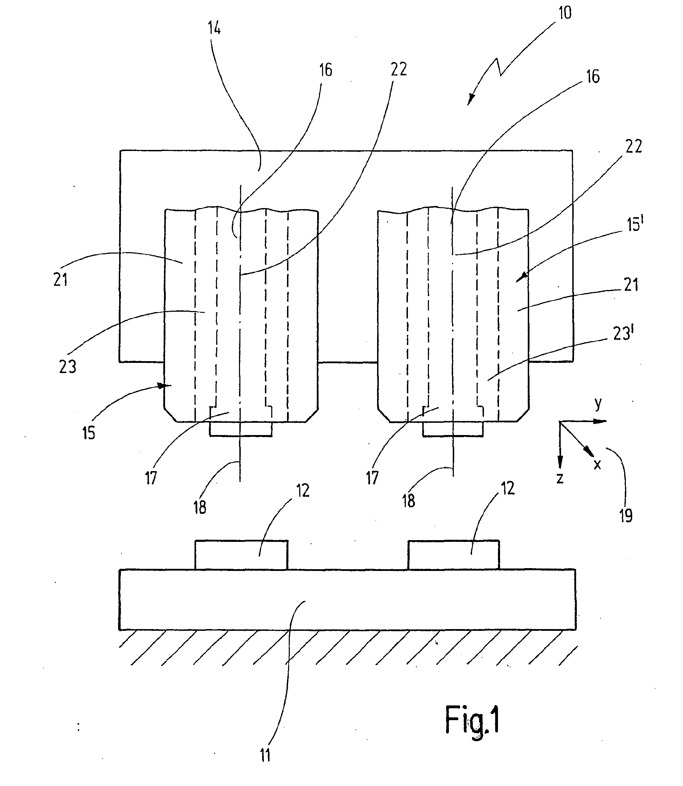

In Fig. 1 ist mit 10 eine Werkzeugmaschine bezeichnet, die in schematischer und ausschnittsweiser Vorderansicht gezeigt ist. Die Darstellung der Fig. 1 ist nicht maßstabsgetreu.

Die Werkzeugmaschine 10 weist einen Werkstücktisch 11 auf, auf dem zwei Werkstücke 12 aufgespannt sind, die mit der Werkzeugmaschine 10 bearbeitet werden sollen.

Ferner ist ein Spindelkopf 14 vorgesehen, an dem zwei Spindeleinheiten 15, 15' vorgesehen sind, in denen jeweils eine Arbeitsspindel 16 gelagert ist, die an ihrem unteren Ende eine Aufnahme 17 für Werkzeuge 18 aufweist, mit denen die Werkstücke 12 bearbeitet werden.

Der Spindelkopf 14 ist relativ zu dem Werkstücktisch 11 in drei orthogonalen Achsen verfahrbar, wie dies durch das bei 19 angedeutete Koordinatensystem X/Y/Z dargestellt ist. Auf diese Weise ist es möglich, die beiden Werkstücke 12 synchron zu bearbeiten, an jedem Werkstück werden identische Bearbeitungen vorgenommen. Um für eine hinreichende Genauigkeit und Reproduzierbarkeit nicht nur zwischen zwei zeitgleich bearbeiteten Werkstücken 12, sondern auch zwischen nacheinander bearbeiteten Werkstücken 12 zu sorgen, sind die Arbeitsspindeln 16 relativ zueinander im Betrieb automatisch justierbar.

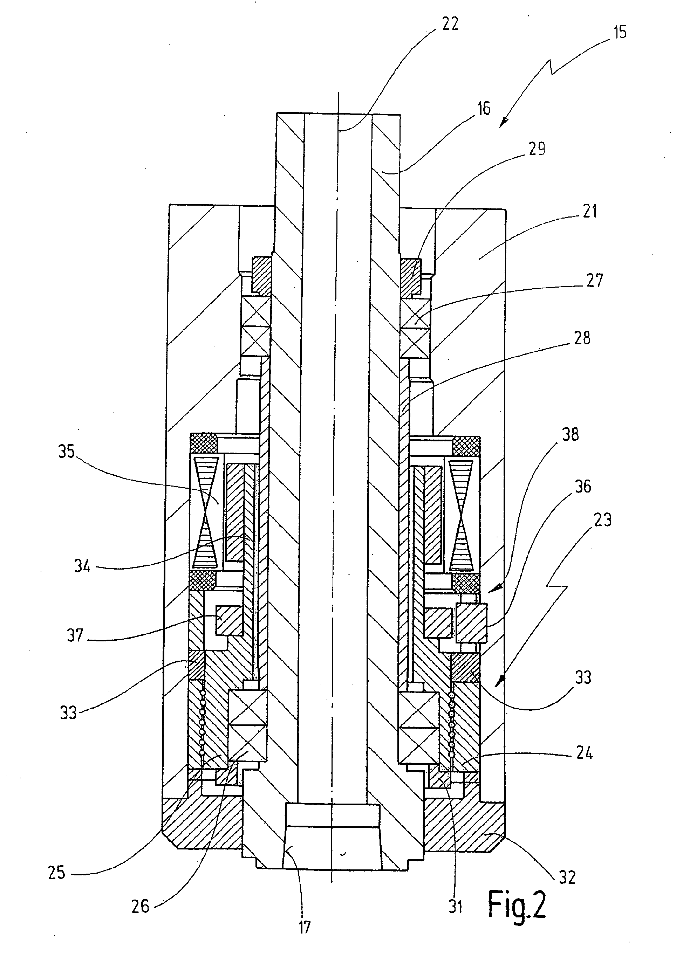

Zu diesem Zweck weist jede Spindeleinheit 15 ein an dem Spindelkopf 14 befestigtes Lagergehäuse 21 auf, in dem die jeweilige Arbeitsspindel 16 um ihre Längsachse 22 drehbar gelagert ist. Zwischen Arbeitsspindel 16 und Lagergehäuse 21 ist jeweils eine Verstelleinheit 23, 23' vorgesehen, über die die Arbeitsspindel 16 gegenüber dem Lagergehäuse 21 verkippt und/oder längs verstellt werden kann, wie dies jetzt genauer anhand der Fig. 2 erörtert wird.

Fig. 2 zeigt einen Längsschnitt durch die Spindeleinheit 15 aus Fig. 1, wobei auch hier die Darstellung lediglich schematisch und nicht maßstabsgetreu erfolgt.

Die Verstelleinheit 23 umfasst eine drehfest in dem Lagergehäuse 21 gelagerte Außenhülse 24 sowie eine gegenüber der Außenhülse 24 drehbare Innenhülse 25, in der die Arbeitsspindel 16 über ein erstes unteres Lager 26 drehbar, aber in Längsrichtung fixiert, gelagert ist. Mit einem zweiten, oberen Lager 27 ist die Arbeitsspindel 16 längsverschieblich in dem Lagergehäuse 21 gelagert.

Zwischen dem unteren Lager 26 und dem oberen Lager 27 erstreckt sich eine Hülse 28. Durch eine auf das obere Lager 27 wirkende Wellenmutter 29 werden das obere und das untere Lager 27 sowie die Hülse 28 miteinander verspannt, so dass die Arbeitsspindel 16 drehbar, aber in Längsrichtung unverrückbar, in der Innenhülse 25 gelagert ist.

Über einen ersten Flansch 31 und einen zweiten Flansch 32 wird dazu das erste Lager 26 in der Innenhülse 25 bzw. die Außenhülse 24 in dem Lagergehäuse 21 gehalten.

Zwischen der Außenhülse 24 und der Innenhülse 25 ist eine bei 33 lediglich angedeutete Klemmvorrichtung vorgesehen, über die verhindert werden kann, dass die Innenhülse 25 sich gegenüber der Außenhülse 24 verdreht, da sie drehfest mit der Außenhülse 24 verbunden ist.

Wenn die Klemmvorrichtung 33 gelöst ist, kann die Innenhülse 25 jedoch gegenüber der Außenhülse 24 verdreht werden. Hierzu ist an der Innenhülse 25 ein sich zentrisch zu der Arbeitsspindel 16 erstreckender Rohransatz 34 vorgesehen, auf den ein Stellmotor 35 einwirkt, der die Innenhülse 35 abschnittsweise verdrehen kann, oder aber die Innenhülse 25 auch gegenüber der Außenhülse 24 in Rotation versetzen kann.

Um die relative Lage zwischen Innenhülse 25 und Außenhülse 24 messtechnisch überprüfen zu können, ist in dem Lagergehäuse 21 ein Sensor 36 vorgesehen, der zusammen mit einem drehfest mit der Innenhülse verbundenen Geberring 37 ein Winkelmesssystem 38 bildet.

Bei der in Fig. 2 gezeigten Konstellation ist die Innenhülse 25 exzentrisch in der Außenhülse 24 gelagert, während die Arbeitsspindel 16 wiederum exzentrisch in der Innenhülse 25 gelagert ist. Wenn die Innenhülse 25 so verdreht wird, dass sich die beiden Exzentrizitäten gerade gegenüber stehen, fällt die Längsachse 22 der Arbeitsspindel 16 mit der Mittelachse der Außenhülse 24 zusammen.

Durch geringfügige Verdrehung der Innenhülse 25 gegenüber der Außenhülse 24 bewegt sich die Längsachse 22 der Arbeitsspindel 16 jetzt im Wesentlichen nur in Y-Richtung, wobei die Arbeitsspindel 16 verkippt wird. Die auf Grund der exzentrischen Kreisbewegung geringfügige Verstellung in X-Richtung kann vernachlässigt werden, so lange die Verstellung um die Nulllage lediglich bspw. ±10° beträgt.

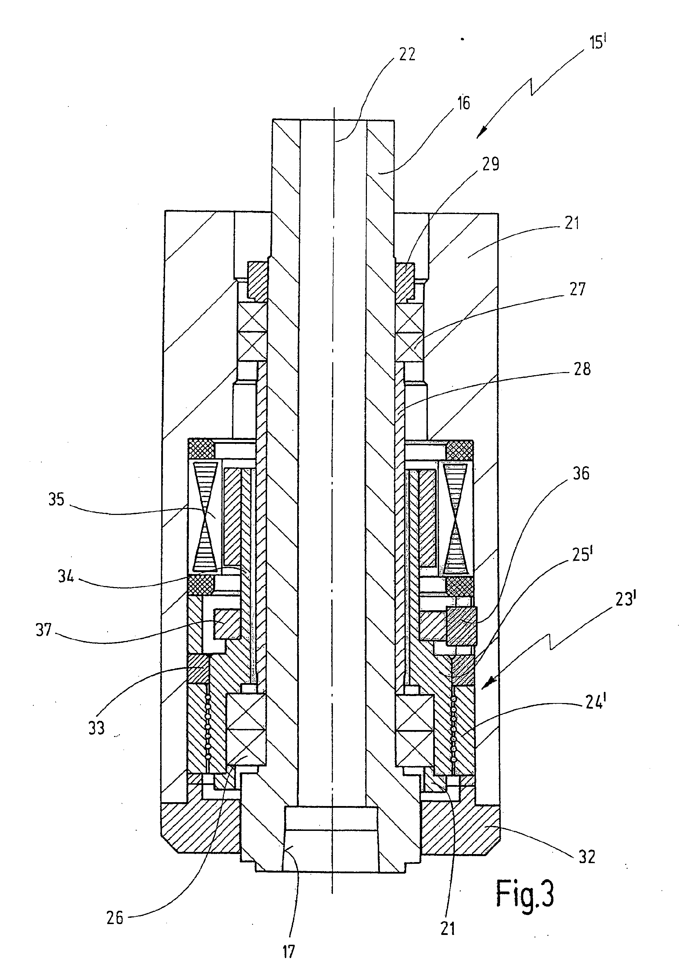

Bei der in Fig. 3 gezeigten Spindeleinheit 15' ist der Aufbau nahezu identisch zu der Spindeleinheit 15 aus Fig. 2, die Verstelleinheit 23' besteht wieder aus einer fest in dem Lagergehäuse 21 gelagerten Außenhülse 24' sowie einer gegenüber der Außenhülse 24' drehbaren Innenhülse 25', die Innenhülse 25' ist jedoch zentrisch zu der Außenhülse 24' angeordnet, wobei auch die Arbeitsspindel 16 zentrisch in der Innenhülse 25' gelagert ist.

Zwischen Innenhülse 25' und Außenhülse 24' ist eine Gewindeverbindung vorgesehen, so dass beim Verdrehen der Innenhülse 25' gegenüber der Außenhülse 24' die Innenhülse 25' und damit die Arbeitsspindel 16 in Z-Richtung verstellt wird.

Während in den Figuren 2 und 3 die Verstelleinheiten 23, 23' jeweils nur eine schnelle Werkzeugachse liefern, sind in den Figuren 14 und 15 Verstelleinheiten 23 gezeigt, die durch Verwendung einer zusätzlichen Zwischenhülse 41 eine Überlagerung von zwei Verstellmöglichkeiten zeigen.

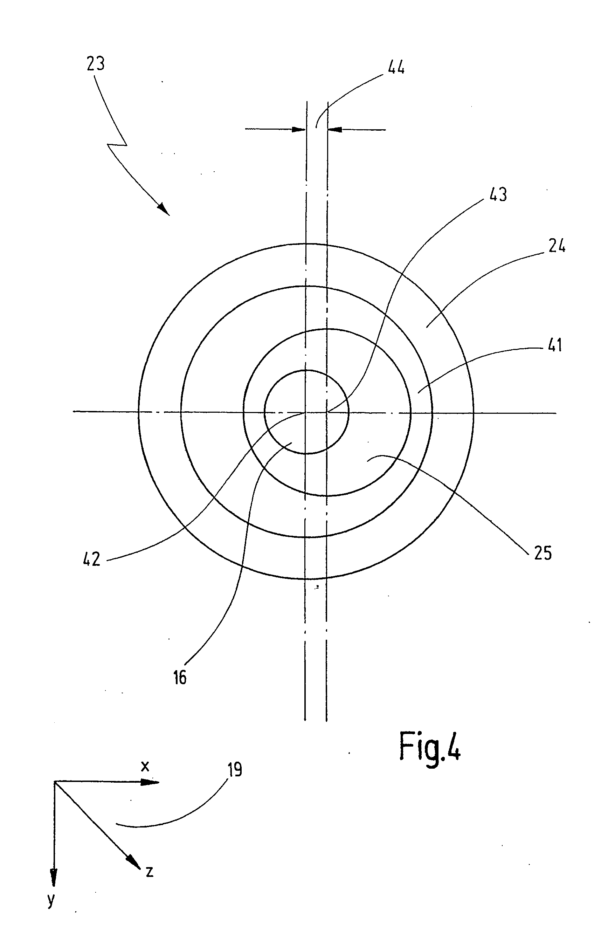

In Fig. 4 ist die Zwischenhülse 41 zentrisch in der Außenhülse 24 gelagert, wobei zwischen Außenhülse 24 und Zwischenhülse 41 eine Gewindeverbindung vorgesehen ist, die wie bei dem Ausführungsbeispiel gemäß Fig. 3 eine Längsverstellung, also eine Verstellung in Z-Richtung ermöglicht. Durch die exzentrische Anordnung der Innenhülse 25 in der Zwischenhülse 41 ermöglicht die Verstelleinheit 23 in Fig. 4 ferner ein Verkippen der Arbeitsspindel 16, die bei geringfügiger Verdrehung der Zwischenhülse 25 gegenüber der in Fig. 4 gezeigten Situation im Wesentlichen eine Auslenkung des bei 42 angedeuteten Mittelpunktes der Arbeitsspindel 16 in Y-Richtung bewirkt. Erst bei stärkerem Verdrehen der Innenhülse 25 gegenüber der Außenhülse 24 erfolgt auch ein Verkippen der Arbeitsspindel 16 in X-Richtung. Der Mittelpunkt der Zwischenhülse 25 ist bei 43 angedeutet, 44 zeigt das Maß der Exzentrizität.

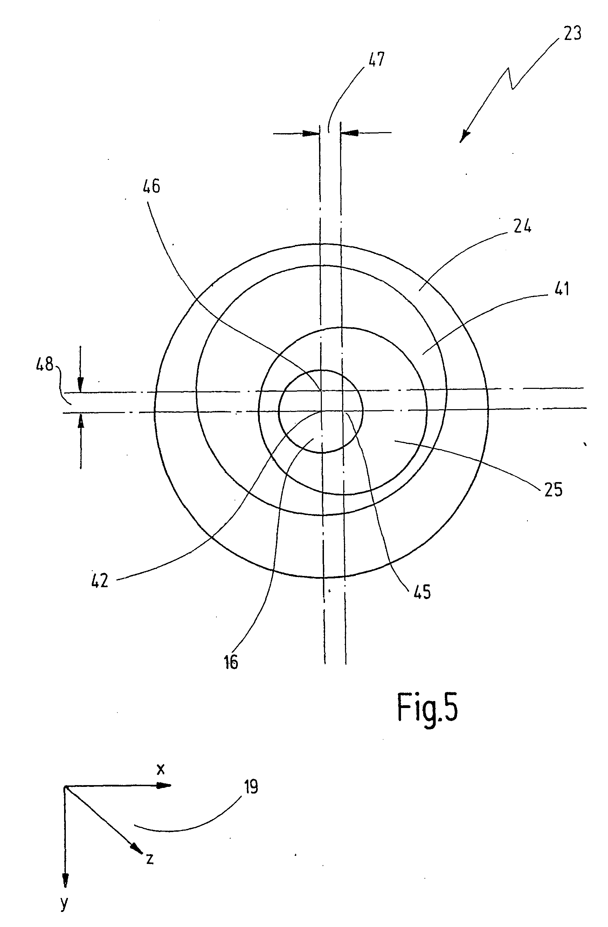

Bei dem in Fig. 5 gezeigten Ausführungsbeispiel ist auch die Zwischenhülse 41 exzentrisch in der Außenhülse 24 gelagert. Der Mittelpunkt 45 der Innenhülse 25 ist gegenüber dem Mittelpunkt 42 der Außenhülse 24 in X-Richtung versetzt, während der Mittelpunkt 46 der Zwischenhülse 41 in Y-Richtung versetzt ist, so dass sich die bei 47 und 48 angedeuteten, senkrecht zueinander stehenden Exzentrizitäten ergeben. Sobald die Zwischenhülse 41 und/oder die Innenhülse 25 gegenüber der Außenhülse 24 verdreht werden, verändert sich selbstverständlich die Lage der Mittelpunkte 45 und 46 gegenüber dem Mittelpunkt 42. Mit anderen Worten, die Längsachse 22 der Arbeitsspindel 16 wird sowohl in X- als auch in Y-Richtung gegenüber der "ursprünglichen" Lage bei 42 verschoben.

Auf diese Weise kann die Verstelleinheit 23 aus Fig. 5 die Längsachse 22 der Arbeitsspindel 16 und damit das von der Arbeitsspindel 16 getragene Werkzeug in der X/Y-Ebene verstellen, was sowohl als schnelle Werkzeugachse wie auch zum Justieren der Arbeitsspindel 16 relativ zu einer anderen Arbeitsspindel verwendet werden kann.

Selbstverständlich ist es auch möglich, die Verstellmöglichkeiten gemäß Figuren 4 und 5 miteinander zu verbinden, also insgesamt zwei Zwischenhülsen 41 vorzusehen, so dass die Arbeitsspindel 16 gegenüber der Außenhülse 24 in allen drei Raumkoordinaten verstellt werden kann.

Für die Zwischenhülse 41 kann bei den Ausführungsbeispielen gemäß Fig. 4 und 5 entweder ein eigener Stellmotor vorgesehen sein, wobei es auch möglich ist, durch eine Klemmvorrichtung für gegenseitiges Verriegeln zwischen Außenhülse und Zwischenhülse einerseits sowie Zwischenhülse und Innenhülse andererseits zu sorgen, um lediglich die Innenhülse anzutreiben und dabei entweder die Innenhülse gegenüber der Zwischenhülse oder die mit der Innenhülse verriegelte Zwischenhülse zusammen mit der Innenhülse gegenüber der Außenhülse zu verstellen.

## Patentansprüche

1. Spindeleinheit mit einer in einem eigenen Lagergehäuse (21) um ihre Längsachse (22) drehbar gelagerten Arbeitsspindel (16), in der eine Aufnahme (17) für Werkzeuge (18) zur Bearbeitung von Werkstücken (12) vorgesehen ist, und mit einer Verstelleinheit (23), um die Arbeitsspindel (16) im Betrieb gegenüber dem Lagergehäuse (21) automatisch und ansteuerbar zu verstellen,
**dadurch gekennzeichnet, dass** die Arbeitsspindel (16) in ihrem Lagergehäuse (21) verkippbar zur Verkippung der Arbeitsspindel im Betrieb gelagert ist.

2. Spindeleinheit nach Anspruch 1, **dadurch gekennzeichnet, dass** die Arbeitsspindel (16) in ihrem Lagergehäuse (21) in Längsrichtung (22) verstellbar gelagert ist.

3. Spindeleinheit nach einem der Ansprüche 1 bis 2, **dadurch gekennzeichnet, dass** die Arbeitsspindel (16) an ihrem unteren oder oberen Ende über ein erstes, mittels eines Stellmotors (35) quer zur Längsrichtung (22) verstellbares Lager (26) in dem zugeordneten Lagergehäuse (21) gelagert ist.

4. Spindeleinheit nach einem der Ansprüche 1 bis 3, **dadurch gekennzeichnet, dass** die Arbeitsspindel (16) an ihrem unteren oder oberen Ende über ein erstes, mittels eines Stellmotors (35) in Längsrichtung (22) verstellbares Lager (26) in dem zugeordneten Lagergehäuse (21) gelagert ist.

5. Spindeleinheit nach Anspruch 3 oder 4, **dadurch gekennzeichnet, dass** das erste Lager (26) in der Verstelleinheit (23) gehalten ist, die eine drehfest mit dem Lagergehäuse (21) verbundene Außenhülse (24, 24') und eine das erste Lager (26) aufnehmende, über den Stellmotor (35) antreibbare Innenhülse (25, 25') umfasst.

6. Spindeleinheit nach Anspruch 5, **dadurch gekennzeichnet, dass** die Innenhülse (25) exzentrisch und drehbar in der Außenhülse (24) gelagert ist.

7. Spindeleinheit nach Anspruch 6, **dadurch gekennzeichnet, dass** die Arbeitsspindel (16) über das erste Lager (26) exzentrisch und drehbar in der Innenhülse (25) gelagert ist.

8. Spindeleinheit nach Anspruch 7, **dadurch gekennzeichnet, dass** die Innenhülse (25') über eine Gewindeverbindung längsverstellbar in der Außenhülse (24') gelagert ist.

9. Spindeleinheit nach einem der Ansprüche 5 bis 8, **dadurch gekennzeichnet, dass** die Innenhülse (25) drehbar in einer über einen Stellmotor (35) antreibbaren Zwischenhülse (41) gelagert ist, die drehbar in der Außenhülse (24) gelagert ist.

10. Spindeleinheit nach Anspruch 9, **dadurch gekennzeichnet, dass** die Innenhülse (25) exzentrisch in der Zwischenhülse (41) und die Zwischenhülse (41) exzentrisch in der Außenhülse (24) gelagert ist.

11. Spindeleinheit nach Anspruch 9, **dadurch gekennzeichnet, dass** die Innenhülse (25) exzentrisch in der Zwischenhülse (41) und die Zwischenhülse (41) über eine Gewindeverbindung längsverstellbar in der Außenhülse (24) gelagert ist.

12. Spindeleinheit nach Anspruch 9, **dadurch gekennzeichnet, dass** die Innenhülse (25) über eine Gewindeverbindung längsverstellbar in der Zwischenhülse (41) und die Zwischenhülse (41) exzentrisch in der Außenhülse (24) gelagert ist.

13. Spindeleinheit nach einem der Ansprüche 3 bis 12, **dadurch gekennzeichnet, dass** die Arbeitsspindel (16) an ihrem von dem ersten Lager (26) abgelegenen Ende über ein in Längsrichtung (22) verschieblich gelagertes zweites Lager (27) in dem zugeordneten Lagergehäuse (21) gelagert ist.

14. Spindeleinheit nach einem der Ansprüche 5 bis 13, **dadurch gekennzeichnet, dass** zwischen Außenhülse (24, 24') und Innenhülse (25, 25') und/oder zwischen Zwischenhülse (41) und Innenhülse (25) eine wahlweise betätigbare Klemmvorrichtung (33) vorgesehen ist, um die Innenhülse (25, 25') und/oder die Zwischenhülse (41) drehfest mit der Außenhülse (24, 24') bzw. die Innenhülse (25) drehfest mit der Zwischenhülse (41) zu verbinden.

15. Werkzeugmaschine mit zumindest einer Spindeleinheit (15) nach einem der Ansprüche 1 bis 14, **dadurch gekennzeichnet, dass** das oder die Lagergehäuse (21) an einem gemeinsamen Spindelkopf (14) angeordnet sind.

## Claims

1. A spindle unit comprising a working spindle (16), which is mounted, so as to be rotatable about its longitudinal axis (22), in its own bearing housing (21) and in which there is provided a receiver (17) for tools (18) for machining workpieces (12), and comprising a repositioning unit (23), in order for the working spindle (16) to be repositioned automatically and controllably in relation to the bearing housing (21) when in operation,
**characterized in that** the working spindle (16) is mounted so as to be tiltable in its bearing housing (21) for tilting the working spindle when in operation.

2. The spindle unit as claimed in claim 1, **characterized in that** the working spindle (16) is mounted in its bearing housing (21) so as to be repositionable in the longitudinal direction (22).

3. The spindle unit as claimed in any one of claims 1 or 2, **characterized in that** the working spindle (16) is mounted, at its lower or upper end, in the assigned bearing housing (21) via a first bearing (26) that can be repositioned transversely relative to the longitudinal direction (22) by means of a positioning motor (35).

4. The spindle unit as claimed in any one of claims 1 to 3, **characterized in that** the working spindle (16) is mounted, at its lower or upper end, in the assigned bearing housing (21) via a first bearing (26) that can be repositioned in the longitudinal direction (22) by means of a positioning motor (35).

5. The spindle unit as claimed in claim 3 or 4, **characterized in that** the first bearing (26) is held in the repositioning unit (23), which comprises an outer sleeve (24, 24'), connected to the bearing housing (21) in rotationally fixed manner, and an inner sleeve (25, 25') that accommodates the first bearing (26) and can be driven via the positioning motor (35).

6. The spindle unit as claimed in claim 5, **characterized in that** the inner sleeve (25) is mounted eccentrically and rotatably in the outer sleeve (24).

7. The spindle unit as claimed in claim 6, **characterized in that** the working spindle (16) is mounted, via the first bearing (26), eccentrically and rotatably in the inner sleeve (25).

8. The spindle unit as claimed in claim 5, **characterized in that** the inner sleeve (25') is mounted, via a threaded connection, in a longitudinally repositionable manner in the outer sleeve (24').

9. The spindle unit as claimed in any one of claims 5 to 8, **characterized in that** the inner sleeve (25) is rotatably mounted in an intermediate sleeve (41) that can be driven via a positioning motor (35) and that is rotatably mounted in the outer sleeve (24).

10. The spindle unit as claimed in claim 9, **characterized in that** the inner sleeve (25) is mounted eccentrically in the intermediate sleeve (41) and the intermediate sleeve (41) is mounted eccentrically in the outer sleeve (24).

11. The spindle unit as claimed in claim 9, **characterized in that** the inner sleeve (25) is mounted eccentrically in the intermediate sleeve (41) and the intermediate sleeve (41) is mounted, via a threaded connection, in a longitudinally repositionable manner in the outer sleeve (24).

12. The spindle unit as claimed in claim 9, **characterized in that** the inner sleeve (25) is mounted, via a threaded connection, in a longitudinally repositionable manner in the intermediate sleeve (41) and the intermediate sleeve (41) is mounted eccentrically in the outer sleeve (24).

13. The spindle unit as claimed in any one of claims 3 to 12, **characterized in that** the working spindle (16) is mounted, at its end that is distant from the first bearing (26), in the assigned bearing housing (21) via a second bearing (27) that is mounted to be displaceable in the longitudinal direction (22).

14. The spindle unit as claimed in any one of claims 5 to 13, **characterized in that** a clamping device (33), optionally capable of being actuated, is provided between outer sleeve (24, 24') and inner sleeve (25, 25'), and/or between intermediate sleeve (41) and inner sleeve (25), in order to connect the inner sleeve (25, 25') and/or the intermediate sleeve (41) to the outer sleeve (24, 24') in a rotationally fixed manner, or to connect the inner sleeve (25) to the intermediate sleeve (41) in a rotationally fixed manner.

15. A machine tool comprising at least one spindle unit (15) as claimed in any one of claims 1 to 14, **characterized in that** the bearing housing or bearing housings (21) is or are arranged on a common spindle head (14).

## Revendications

1. Unité de broche dotée d'une broche de travail (16) montée à rotation autour de son axe longitudinal (22) dans un boîtier de support propre (21), dans laquelle un logement (17) est prévu pour des outils (18) d'usinage de pièces (12), et comprenant une unité de réglage (23), afin de régler la broche de travail (16) pendant le fonctionnement par rapport au boîtier de support (21) automatiquement et de manière commandable,
**caractérisée en ce que** la broche de travail (16) est montée dans son boîtier de support (21) de manière à pouvoir être basculée pour faire basculer la broche de travail pendant le fonctionnement.

2. Unité de broche selon la revendication 1, **caractérisée en ce que** la broche de travail (16) est montée de manière réglable dans la direction longitudinale (22) dans son boîtier de support (21).

3. Unité de broche selon l'une quelconque des revendications 1 à 2, **caractérisée en ce que** la broche de travail (16) est supportée à son extrémité inférieure ou supérieure par le biais d'un premier palier (26) réglable au moyen d'un moteur de commande (35) transversalement à la direction longitudinale (22), dans le boîtier de support associé (21).

4. Unité de broche selon l'une quelconque des revendications 1 à 3, **caractérisée en ce que** la broche de travail (16) est montée à son extrémité inférieure ou supérieure par le biais d'un premier palier (26) réglable au moyen d'un moteur de commande (35) dans la direction longitudinale (22), dans le boîtier de support associé (21).

5. Unité de broche selon la revendication 3 ou 4, **caractérisée en ce que** le premier palier (26) est maintenu dans l'unité de réglage (23), qui comprend une douille extérieure (24, 24') connectée de manière solidaire en rotation au boîtier de support (21) et une douille intérieure (25, 25') recevant le premier palier (26) et pouvant être entraînée par le biais du moteur de commande (35).

6. Unité de broche selon la revendication 5, **caractérisée en ce que** la douille intérieure (25) est montée de manière excentrée et rotative dans la douille extérieure (24).

7. Unité de broche selon la revendication 6, **caractérisée en ce que** la broche de travail (16) est montée par le biais du premier palier (26) de manière excentrée et rotative dans la douille intérieure (25).

8. Unité de broche selon la revendication 7, **caractérisée en ce que** la douille intérieure (25') est montée par le biais d'une connexion filetée de manière réglable en longueur dans la douille extérieure (24').

9. Unité de broche selon l'une quelconque des revendications 5 à 8, **caractérisée en ce que** la douille intérieure (25) est montée à rotation dans une douille intermédiaire (41) pouvant être entraînée par le biais d'un moteur de commande (35), qui est montée à rotation dans la douille extérieure (24).

10. Unité de broche selon la revendication 9, **caractérisée en ce que** la douille intérieure (25) est montée de manière excentrée dans la douille intermédiaire (41) et la douille intermédiaire (41) est montée de manière excentrée dans la douille extérieure (24).

11. Unité de broche selon la revendication 9, **caractérisée en ce que** la douille intérieure (25) est montée de manière excentrée dans la douille intermédiaire (41) et la douille intermédiaire (41) est montée par le biais d'une connexion filetée de manière réglable en longueur dans la douille extérieure (24).

12. Unité de broche selon la revendication 9, **caractérisée en ce que** la douille intérieure (25) est montée par le biais d'une connexion filetée de manière réglable en longueur dans la douille intermédiaire (41) et la douille intermédiaire (41) est montée de manière excentrée dans la douille extérieure (24).

13. Unité de broche selon l'une quelconque des revendications 3 à 12, **caractérisée en ce que** la broche de travail (16) est montée à son extrémité éloignée du premier palier (26) par le biais d'un deuxième palier (27) monté de manière déplaçable dans la direction longitudinale (22) dans le boîtier de support (21) associé.

14. Unité de broche selon l'une quelconque des revendications 5 à 13, **caractérisée en ce que** l'on prévoit entre la douille extérieure (24, 24') et la douille intérieure (25, 25') et/ou entre la douille intermédiaire (41) et la douille intérieure (25) un dispositif de serrage (33) pouvant être actionné de manière sélective, afin de relier la douille intérieure (25, 25') et/ou la douille intermédiaire (41) de manière solidaire en rotation à la douille extérieure (24, 24') ou la douille intérieure (25) de manière solidaire en rotation à la douille intermédiaire (41).

15. Machine-outil comprenant au moins une unité de broche (15) selon l'une quelconque des revendications 1 à 14, **caractérisée en ce que** le ou les boîtiers de support (21) sont disposés sur une tête de broche commune (14).
